# EUROPEAN PATENT SPECIFICATION

(11) **EP 1 912 119 B1**
(45) Date of publication and mention of the grant of the patent: **19.05.2010**
(21) Application number: 06021363.4
(22) Date of filing: 11.10.2006
(51) Int. Cl.: G06F 9/50

(54) **Synchronization and concurrent execution of control flow and data flow at task level**
Synchronisierung und paralleles Ausführen von Kontrollfluss und Datenfluss auf Task-Ebene
Synchronisation et exécution concurrente de flux de commande et flux de données au niveau tâche

(43) Date of publication of application: 16.04.2008
(73) Proprietor: RHF GbR, 81825 Munich (DE)
(72) Inventor: Robelly, Pablo, 01189 Dresden (DE); Seidel, Hendrik, 01099 Dresden (DE); Herhold, Patrick, 01277 Dresden (DE); Fettweis, Gerhard, 01187 Dresden (DE)
(74) Representative: Grünecker, Kinkeldey, Stockmair & Schwanhäusser Anwaltssozietät

(56) References cited:
- ROBELLY J P ET AL: "Energy efficiency vs. programmability trade-off: architectures and design principles" 2006 DESIGN, AUTOMATION AND TEST IN EUROPE (IEEE CAT. NO. 06EX1285C) IEEE PISCATAWAY, NJ, USA, 10 March 2006 (2006-03-10), page 6 pp., XP002427945 ISBN: 3-9810801-0-6
- KASAHARA H ET AL: "OSCAR multi-grain architecture and its evaluation" PROCEEDINGS. INNOVATIVE ARCHITECTURE FOR FUTURE GENERATION HIGH-PERFORMANCE PROCESSORS AND SYSTEMS (CAT. NO.97TB100229) IEEE COMPUT. SOC LOS ALAMITOS, CA, USA, 1998, pages 106-115, XP002427946 ISBN: 0-8186-8424-0
- YANBING LI ET AL: "Scheduling and allocation of single-chip multiprocessors for multimedia" SIGNAL PROCESSING SYSTEMS, 1997. SIPS 97 - DESIGN AND IMPLEMENTATION., 1997 IEEE WORKSHOP ON LEICESTER, UK 3-5 NOV. 1997, NEW YORK, NY, USA,IEEE, US, 3 November 1997 (1997-11-03), pages 97-106, XP010249770 ISBN: 0-7803-3806-5

## Description

The invention generally relates to processor systems for executing applications comprising multiple tasks on multiple processing elements and in particular to processor systems and corresponding processes of controlling and scheduling the execution of multiple tasks on multiple processing elements that are capable of executing tasks in parallel. More specifically, one aspect of the present invention relates to the acceleration and concurrent execution in a multiprocessor system of some or all parts of a program which resemble data flow components (tasks) and which are embedded into a control flow program.

Certain terms are used throughout the following description and claims to refer to particular system components. A person skilled in the art will appreciate that components may be referred to by different names. It is however not intended to distinguish between components that differ by name but not function. Moreover, components and features as illustrated in the accompanying drawings are indented to provide a general understanding of the present invention. Thus, these illustrated components and features are functional aspects that can be implemented as one or more physical components without departing from the invention as disclosed below and defined in the claims.

The following terms are used for clarification of the subsequent descriptions:

Control Flow: The part of a computer program that controls the overall execution of a program by defining a sequence or flow of tasks and/or instructions. It can also specify the types of the program's subfunctions and tasks to be performed. As an example, the control flow can be a sequence of atomic instructions of an application, which from a programmer perception are executed one after another and where some instructions can alter the execution sequence according to program conditions. Atomic instructions are thereby instructions that are not further dividable during execution. Alternatively, the control flow can be a sequence of executable instructions of an application like tasks which themselves are comprised of instructions. In other embodiments, the control flow can be a sequence of atomic and non-atomic instructions. Other forms and definition of Control Flow information are known in the art and can be applied to the teachings of the present invention.

Data Flow: Execution of program components based on the idea that their execution is triggered by the availability of necessary input data. These program components can be tasks or instructions of the application.

Task: Program component that encapsulates an arbitrary number of input and output data blocks as well as a sequential finite program (sequence of instructions) that processes these input data blocks in order to produce output data blocks. A task can be thought of as a sub-program or procedure for processing input data according to a defined sequence or flow of program instructions that lead to the output data. A task may also be fully defined through its input and output data; or alternatively by its operations or instructions.

Partitioning: Spatial and/or temporal mapping of a task to a processing element.

Spatial Mapping: Determination of on which processing element a certain task is to be executed

Temporal Mapping: Determination of when a certain task is to be executed on a certain processing element.

Data dependency: a dependency between the input and/or output data blocks of tasks that requires the execution of tasks in a certain order so as to ensure that the causality properties of the program are maintained. Data dependencies naturally limit the degree of parallel execution of tasks. For example, the execution of one task may require, as an input, some or all of the output values of another task. Thus, this task or the input data of this task depends on the output data of another task and may not be started until the required data is available. The input and/or output data blocks could also be a single value or multiple values.

Synchronization: Set of actions used, for example, to ensure that no violation of true dependencies occurs. These dependencies can be at the data block level or at task level.

There are several state-of-the-art approaches to achieve the concurrent execution of tasks in multiprocessor systems and their co-ordination and synchronization with control flow. These known concepts are summarized below, together with a brief discussion of their general drawbacks and their specific deficiencies in view of the present invention, where appropriate.

"Superscalar processors" jointly perform control flow and data flow processing at instruction level. Instructions, which in this context can be regarded as tasks with a low level of granularity are executed concurrently in instruction execution pipes while causality is maintained by checking and obeying the mutual data dependencies among the operands of the instructions. Binary software compatibility for different machine configurations (i.e. for different numbers of instruction execution pipes) is guaranteed by decoupling the processing of control and data flow parts at run time. Performance scalability is achieved over different numbers of execution pipes. However, the data flow processing part is limited to scalar operands and instructions; as a result, superscalar instruction level processing is not suitable for processing components of a higher level of granularity such as tasks that comprise an arbitrary number of input and output data blocks and a finite subprogram of, for example, at least some hundreds of cycles.

Data flow oriented systems such as COSSAP and Simulink® and other such applications known as "data flow architectures" process data flows in a block-wise manner. An example for such a system is presented in EP1365321A2. However, the data blocks are often required to be of a fixed number and/or size. An even more fundamental drawback of data flow systems is their inability to handle control flow that adds a dynamic element to the data flow processing.

Data flow oriented systems assume a sequence of tasks to be performed in a fixed order. There is no concept of dynamically altering, enhancing or redefining the sequence and its properties by control flow decisions that are based on run-time conditions. This limits the applicability of data-flow oriented systems. Also, data-flow oriented systems do not require dynamic memory allocation.

There are several types of devices and methods available that aim at jointly handling the concurrent execution of control flow and tasks. Typical control means include interrupts, semaphores, polling, spin locking, and multithreading. These mechanisms are often supported by an operating system. Common to all these methods is their non-deterministic event-based synchronization of the execution of control flow and tasks. As a consequence, they suffer from various disadvantages. First, the programmer must explicitly introduce in the control flow part mechanisms for assuring the causality properties of a program. This leads to solutions that are not portable over different machine organizations. A machine configurations is determined by the number and type of processor cores. In other words, there is no binary software compatibility; the program can be executed only on the machine configuration for which it has been designed and compiled. As a result, increasing performance by adding processor cores, i.e. scaling over the number of processing elements, requires that the program be adapted manually, which often incurs a significant effort.

Second, introducing such synchronization mechanisms requires a deep knowledge of data dependencies of the program, and as a result, the program code is hard to understand and to debug since it is not coded in a typical readable sequential control flow programming model. Third, the run-time overhead associated with these synchronization mechanisms and events often causes serious system performance degradation - the system is most of the time busy coordinating synchronization events instead of actually executing code. It is important to remark that in the context of these devices and methods, the concept of task is slightly different to our concept as our concept requires the explicit encapsulation of produced and consumed data blocks.

One example of such a system is disclosed in EP0473444B1. The method determines the characteristics of individual tasks prior and during execution, and relies on operating system mechanisms and queuing to coordinate the execution of tasks. The method is further limited by the fact that the sequence of processed tasks is not arbitrary.

Dynamic and static priority based scheduling supported by a pre-emptive real time operating system is a wide spread practice for spatial and temporal mapping of tasks. As already mentioned above, in this context tasks have a general definition and do not explicitly encapsulate an arbitrary number of input and output data blocks as in the present invention discussed herein below. These known methods work efficiently for independent (parallel) tasks. However, they cause heavy overhead and significant performance degradations as tasks present data dependencies or overlapped resource utilization. For this type of tasks, synchronization strategies such as semaphores, polling, etc, are used for ensuring program causality as it was explained above. These kinds of synchronization strategies between tasks further make the introduction of mechanisms for mitigating priority inversion effects, which cause tasks of a higher priority being blocked by lower priority tasks, compulsory. These mechanisms are related to heavy overhead costs.

A combination of a data-flow oriented system and a system jointly handling control flow and data flow is disclosed in US6069705. There, a fixed number of types of so-called "cofunctions" are processed. The system, however, cannot process an arbitrary number and type of tasks, as each task type is mapped into a specific queue. Moreover, there is no synchronization with control flow, and the system partly relies on interrupts for controlling the parallel processors.

A further way of mapping tasks for concurrent execution onto a multiprocessor system is by means of a compiler. This mapping is static in nature; the disadvantage is that in order to guarantee the causality properties of the program, the compiler must calculate all possible executions paths through the control flow. This leads to an undecidable problem, since the mapping algorithms cannot be resolved in polynomial time. Moreover, changes of the underlying machine organization require a new compilation of the application and thus, it does not achieve binary software compatibility.

ROBELLY J P ET AL discloses architectures and design principles regarding programmable architectures exploiting task level parallelism. Control flow defines which tasks are to be executed according to either the input data stream or data generated by previous tasks. Thus, a task consumes and produces chunks of data whereas control flow determines the tasks to be executed. Two directives allow for defining tasks, which can be executed in parallel. Tasks can be regarded as an instruction stream of a higher granularity, which is processed by a scheduler in order to fire data transfers and kernel computations. In order to facilitate the scheduling, the information regarding the execution time of kernel computations as well data transfers have to be known in advance. Computational kernels are executed in programmable accelerators based on a template for DSPs, which are specifically designed to exploit data level parallelism. Every DSP core is able to execute any task so that the scheduler can choose any core for executing kernel computation according to DSP load.

KASAHARA H ET AL discloses an architecture for multigrain parallel processing. A macroflow compilation scheme is composed of four steps: generation of macrotasks; control flow and data-flow analysis among macrotasks; earliest executable condition analysis of macrotasks to detect parallelism among macro tasks; and code generation for PCs and for dynamic schedulers. A macroflow graph is generated that represents control flow and data dependency among macrotasks. Dynamic scheduling uses the macroflow graph to dynamically schedule to processor clusters.

It is therefore the object of the present invention to provide an improved processor system and a corresponding method for executing an application comprising a plurality of tasks by a data flow means comprising a plurality of processing elements, wherein control flow information specifies the plurality of tasks, which are easy for programmers to use and allow for an efficient execution of the tasks of the application.

This object is solved by the subject matter of the independent claims.

Preferred embodiments are defined in the dependent claims.

The concept used by message passing multiprocessor systems differs from the present invention as the concept uses messages for achieving synchronization between different tasks or threads. This method leads to systems with relatively simple hardware, but makes programmers work hard to take advantage of the hardware since in most cases it requires a complex data partioning.

The concept used by shared memory multiprocessor systems adds additional hardware to provide from a programmer perspective the illusion of a single shared memory common to all processors, which eases a complex manual data distribution. Those skilled in the art will acknowledge that classical shared memory multiprocessors differ from the present invention as they require mechanisms for ensuring memory coherency and consistency. Complex approaches as snoopy or directory-based coherency protocols are required for tracking shared cache lines in the multiprocessor system. Snoopy protocols typically operate by observing the traffic on the machine's interconnect network. Moreover, these techniques make a system highly unpredictable, thus leading to implementations that are not amenable for real-time processing.

An improved processor system and a corresponding method are therefore provided that may allow for a flexible, efficient and low-overhead synchronization of the data-flow of an application and may provide for the ability to deal with arbitrary types and numbers of tasks with an arbitrary number and size of input- and output data blocks.

In one embodiment, a processor system for executing at least one application is provided, wherein the at least one application comprises a plurality of tasks, where at least two of these plurality of tasks are executed in parallel by the processor system. A control flow means is used for executing control flow information, which can be a RISC processor, a DSP or any other suitable processing means. The control flow information comprises a plurality of instructions that are executable by the control flow means, wherein the control flow information specifies the plurality of tasks of said at least one application. A data flow means executes the plurality of tasks. This data flow means comprises a plurality of processing elements that are capable of processing the plurality of tasks. Each processing element is adapted to execute one or more tasks by processing at least one input data value and by outputting at least one output data value. The system further comprises a synchronization means for controlling the execution of the tasks by these processing elements. This control flow means provides the plurality of tasks that are specified by the control flow information to said synchronization means. Alternatively, the control flow means may not provide the tasks, but may merely indicate to the synchronization means the set of tasks. The control flow means provides or identifies the plurality of tasks that are specified by said control flow information to said synchronization means (120). The synchronization means can then determine an order of execution of the provided or identified tasks in that it identifies and resolves data dependencies between the input data and output data of the plurality of tasks. According to this determined order of execution, the synchronization means can then map the plurality of tasks to the plurality of processing elements by specifying on which of the plurality of processing elements each of said plurality of tasks is to be executed.

The synchronization means may thus control the execution of the application at a task level in that it may receive the complete tasks of the application or an indication thereof. The synchronization means may then automatically check and resolve the data dependencies of these tasks at run-time in order to determine the order of execution the tasks on the plurality of processing elements. The synchronization means may thereby control the actual execution of the provided tasks independently from the synchronization means, which concurrently or partly concurrently executes the control flow information under communication with the synchronization means as described above.

A person skilled in the art will recognize that the present embodiment may improve the known systems and provide the following: (i) a flexible, efficient and low-overhead synchronization of control- and data-flow, (ii) the ability to deal with arbitrary types and numbers of tasks with an arbitrary number and size of input- and output data blocks, where all these parameters are defined dynamically at run time, (iii) binary software compatibility, portability, scalability, and reliability of the program code, (iv) the ability to offer the programmer a single higher-level sequential programming model for programming control flow and yet take advantage of concurrent task execution, (v) ease of understanding and thus easy of debugging the program code, (vi) the ability to offer a predictable system that is amenable for performing real-time processing across control flow and data flow parts.

Further embodiments of the invention will be discussed below with reference to the drawings.

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
FIG. 1 is a block diagram showing details of a system according to an embodiment;
FIG. 2 is a flowchart of a computer program comprising control flow and tasks;
FIG. 3 illustrates task instructions embedded in control flow code according to an embodiment;
FIG. 4 is a flow chart illustrating the process of task preparation according to an embodiment;
FIG. 5 is a flow chart illustrating the process of task dispatching according to an embodiment;
The illustrative embodiments of the present invention will be described with reference to the figure drawings wherein like elements and structures are indicated by like reference numbers.

In general, those skilled in the art will understand from the following that the subsequently discussed parts, components or means of the multiprocessor system according to the present invention are meant to refer to logical or functional means of the system rather then to separate physical components.

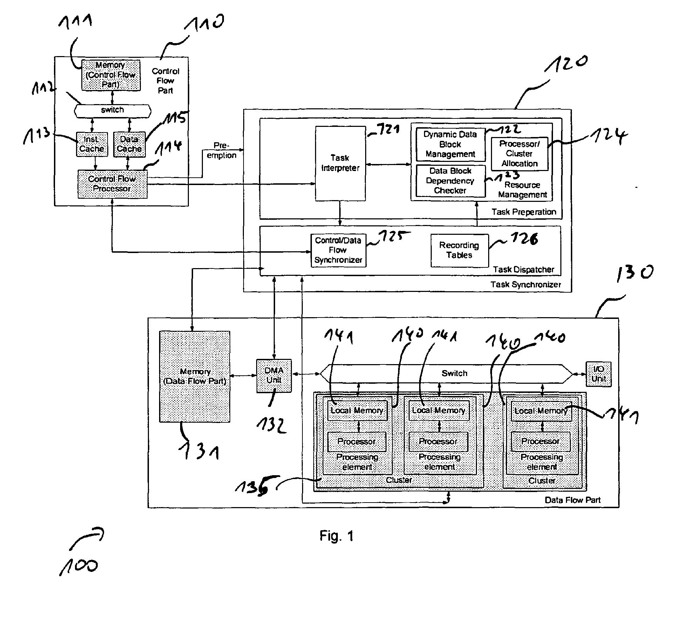

Referring now to the drawings and particularly to FIG. 1 which illustrates an embodiment of the present invention, a multiprocessor system (100) for processing programs comprising control flow and data flow components. According to the present embodiment, the system comprises a control flow processing part (110), a data flow processing part (130), and a synchronization part (120). There is further provided a corresponding method of executing purely sequential computer programs, in which information related to data flow software components named tasks is embedded. Each task can have an arbitrary number of input and output data blocks, each block can be of arbitrary size. A task can further comprise a finite sequential program that consumes these input data blocks in order to produce output data blocks. The location and size of the input and output data blocks can depend on the control flow elements of the program, which can then be resolved at run time. In some embodiments of the present invention, the tasks to be executed are determined by the control flow and this is also resolved at run time. The data flow processing part can comprise a plurality of programmable processing elements (140), each having local memory (141). In some embodiments however, only some programmable processing elements may have their own local memory.

A task synchronizer (120) of the multiprocessor system may have one or more means for performing the following functionalities: Extraction and preparation of information related to the data flow program (tasks) from the control flow program. Dynamic memory management of data blocks. Task and data block transfers dispatching to the data flow processing part for their concurrent execution. Spatial mapping of tasks to processing elements of the data flow processing part. Temporal mapping (scheduling) of tasks according to the causality properties among tasks. Synchronization between control flow and data flow part to ensure causality among these parts.

According to the embodiment, there is provided a computer program processing system and method that comprises a control flow part, a data flow part, and a task synchronizer. The control flow part processes the control flow of the computer program. The data flow part processes certain tasks or subprograms of the application. It comprises multiple processing elements to support the parallel execution of tasks. Tasks are parts of the application; typically, tasks perform finite sequences of compute-intense instructions that are amenable for processing on the processing elements of the data flow part. For example, the processing elements of the data flow part can be specialized digital signal processors. The task synchronizer coordinates the execution of tasks and decouples the execution of control flow and data flow. Specifically, it can perform a spatial and temporal mapping of tasks to the processing elements of the data flow part and it synchronizes the task execution with the control flow.

The task synchronizer's functionality may further include the checking and resolution of data dependencies among the tasks as well as between the tasks and the control flow. The task synchronizer also manages the memory of the processing elements of the data flow part. As a result, the task synchronizer simplifies design of applications and systems, since contrary to known systems it automatically and reliably manages the execution of tasks, thereby avoiding the described shortcomings of the known systems.

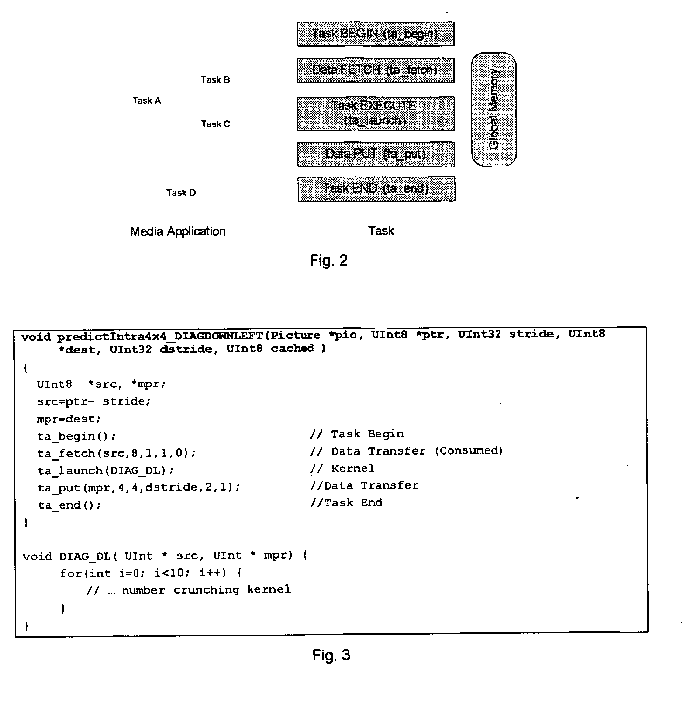

Signal processing applications can be regarded as computer programs that comprise tasks and a control flow. This is illustrated in Figure 2. Control flow is a sequential program comprising atomic instructions that are executed serially one after another. There are however also some instructions like conditional or unconditional jumps or "if-then"-clauses that can dynamically change the execution path of the program according to the state of program variables. As a result, this may also alter the tasks to be executed, thus making the set and order of tasks to be executed depend dynamically on the execution of control flow.

In the context of the present embodiment, tasks may be regarded as software components that can typically encapsulate an arbitrary number of input and output data blocks as well as a finite sequential subprogram that typically executes some number crunching algorithm like filter, transformations, interpolations, etc. That subprogram is a task that consumes input data blocks in order to produce output data blocks.

The control flow may determine the tasks to be executed at run time. Data dependencies between tasks at the data block level determine for example the amount of parallelism to be exploited through concurrent execution of tasks.

In one embodiment of the present invention, the control flow runs on the control flow part. Figure 1 illustrates an example of such a control flow part. Further, Figure 1 illustrates the task synchronizer and the data flow part.

According to this embodiment, the control flow part (110) comprises a control flow processor (114) for processing the control flow and a memory. The application program that comprises control flow instructions, task instructions, and related data is stored in this memory. The program starts its execution on the control flow processor (114), and task instructions that describe the tasks to be executed as well as their properties are passed to the task interpreter (121) in the task synchronizer (120). The task interpreter together with other blocks performs a task preparation in which tasks are prepared for execution. For example, one of the steps performed includes the checking of data dependencies among the input- and output blocks of tasks. The task preparation unit interacts with the task synchronizer to co-ordinate the execution of tasks; this is specifically performed by the control/data flow synchronizer (125) by relying on the recording tables (126) that store information on the state of execution of the tasks and their related data transfers. One of the functions performed by the control/data flow synchronizer (125) is the management of data transfers to and from the local memories (141) of the processing elements (140). These data transfers are executed by the DMA unit (132) of the data flow part (130). The processors of the processing elements (140) then execute the tasks. Prior to starting the task execution, the input data block blocks as well as the actual instructions to be performed are copied to the local memory (141) by the DMA unit (132) as instructed by the by the control/data flow synchronizer (125). This transferred data may be stored and maintained at the control flow memory (111). According to other embodiments, it may be stored in a data memory (131) or may be distributed among both memories. After the execution of a task, the resulting output data block is transferred back from the local memories - again controlled by the by the control/data flow synchronizer (125) and executed by the DMA unit (132).

Generally, the control flow processing on the control flow part (110) occurs simultaneously with the task processing on the task synchronizer (120) and the data flow part (130). However, the control flow part can be instructed by the task synchronizer to halt its control flow execution if the control flow requires that a task returns its output data blocks (data dependency), or if the number of tasks currently processed by the task synchronizer and the data flow part reaches the maximum possible number of such tasks. In one specific embodiment, this maximum number is given by the size of the recording tables (126)

The control flow processor (114) as shown in Figure 1 can for example be a RISC processor or a DSP. Tasks are processed on the processing elements of the data flow part (110). The processing elements can form a multi-core system. In a further embodiment of the present invention is the transfer of data blocks between the several memories explicitly scheduled by the system.

A task call can be embedded in the control flow as a statement that defines the subprogram to be executed as well as the input- and output data blocks. According to one specific embodiment, prior to processing the program, a pre-processor automatically converts each task call into a series of task instructions and embeds these task instructions into the control flow. A pre-processor is a separate program that, at compile time, analyses and adapts the source code of the program to be processed. These task instructions correspond to certain stages of processing as shown in Figure 2 and Figure 3. The exemplary instructions are:
Task Begin (ta_begin): it signalizes the beginning of a new task. There is only one ta_begin for each task.
Task Fetch (ta_fetch): it signalizes a data block to be consumed by the task. As it is shown in Figure 3, some variables that parameterize the data block fetch are resolved at run time. These parameters can determine the memory location or the size of the array to be fetched to the local memory of the processing element before execution of the task. Multidimensional arrays with their respective size at each dimension can also be declared. The number of data blocks and thus of ta_fetch instructions can be arbitrary for each task.
Tasks Launch (ta_launch): it signalizes the name of the tasks to be executed by the system as soon as its pending data dependencies are resolved. The finite subprogram that is called can be encapsulated in any regular function of high-level programming language (e.g. C) that consumes and produces the data blocks determined in the task instructions. This is shown in Figure 3.
Task Put (ta_put): it signalizes a data block to be produced by the task. As it is shown in Figure 3 some variables that parameterize the data block put are resolved at run time. These parameters can determine the memory location or the size of the array to be put from the local memory of the processing element after execution of a task. Multidimensional arrays with their respective size at each dimension can also be declared. The number of data blocks and thus of ta_put instructions can be arbitrary for each task. In other words, a ta_put is the corresponding counterpart for a ta_fetch instruction.

It is apparent to a person skilled in the art that these task instructions are one example only to illustrate the steps performed.

One purpose of the embodiment presented in Figure 1 is to achieve the concurrent execution of tasks. For this purpose, the synchronization between tasks as well as between tasks and control flow has to be ensured. This decoupling of the control flow and data flow (task execution) is done by means of the unit called task synchronizer (120). The task synchronizer can have some or all of the following functionalities:
Extraction of task information from control flow code by observing the task instructions discussed above.

Resolving of data dependencies at task level, i.e. at data-block level, automatically and at run-time.

Memory management at run time, which includes allocation of memory in the local memories of the processing elements of the data flow part.

Dynamic scheduling of data transfers between the memories of the system, as well as dynamic scheduling of the task execution (data flow based policy).

Automatic synchronization of control flow and data flow.

For easier understanding of the invention, it can be presumed that the decoupling between control flow and data flow is achieved by processing the task instructions in two logical steps, namely task preparation and tasks dispatcher. Although it might not be necessary that both are implemented in a two-step procedure. These two steps rather illustrate some logical functionalities with regard to task management.

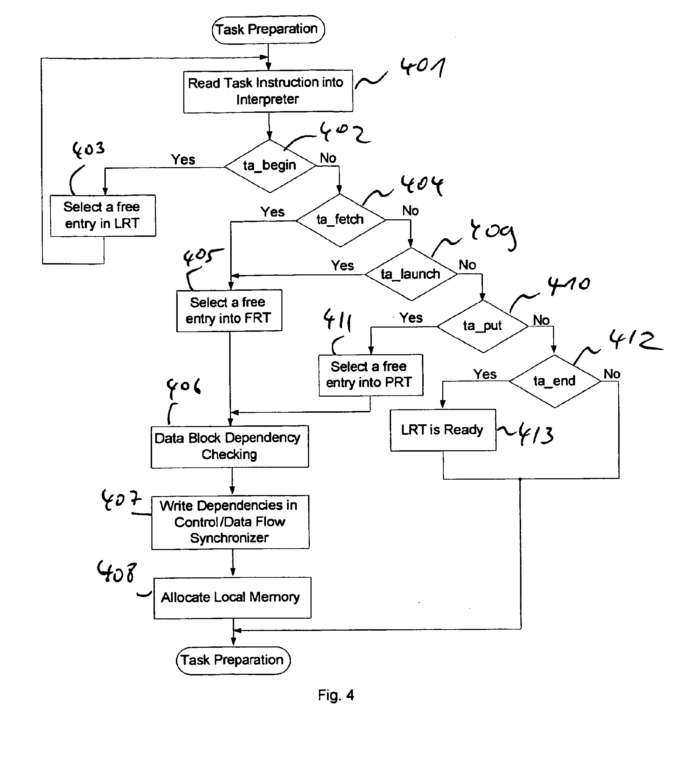

The first aspect that is called task preparation according to one embodiment of the invention is illustrated in Figure 4. The purpose of the task preparation is to extract information necessary for initiating the data flow execution from the task instructions. In particular, this may include to identify information concerning data dependencies and to write this in the data dependency tables located in a Control/Data Flow Synchronizer (125) of the multiprocessor system, and to identify information on pending tasks as well as data transfers and to write this in recording tables (126) of the multiprocessor system.

Together, the Control/Data Flow Synchronizer (125) and the recording tables (126) form a task dispatcher.

The recording tables (126) of the task dispatcher can comprise three types of tables, namely fetch recording table (FRT), put recording table (PRT) and launch recording table (LRT). FRT and PRT contain pending data transfers for the DMA unit (132) of the data flow part (130) of the multiprocessor system, and the LRT contains pending tasks to be executed by the processing elements.

Writing into these tables has a blocking nature. If there is no space available in the tables, then one possible way is to stop execution of the control flow until pending tasks are resolved and thus, new entries become available.

The flow chart shown in Figure 4 further illustrates the functionality of the task preparation part. The control flow containing the task instructions may run on the control flow processing means (110) of Figure 1. According to one embodiment, the following is performed during this execution.

In step 401, task instructions are written sequentially into a task interpreter means (121) of the multiprocessor system. The task instructions are recognized by the task preparation unit in order to execute the corresponding preparation.

In case that the task instruction is a ta_begin (402), the task preparation selects (403) a free entry in the LRT for writing the incoming task. This can include selecting a suitable processor and cluster by the Processor/Cluster Allocation unit (124) of the multiprocessor system as it will become more apparent from the description outlined below.

In case a task instruction is either a ta_fetch (404) or a task ta_launch (409), then a free entry on the FRT is chosen (405). In one specific embodiment, the information extracted from the control flow regarding the location of the data block, the size and/or the dimensions of the data block are recorded into this table in order to control the DMA unit (132). It can be noted that the data block can also be the task's sequential subprogram (sequence of instructions).

In case a task instruction is a ta_put (410) a free entry on the PRT is chosen (411). In this entry the information regarding the location of the target data block, the size of the array and the dimension are recorded in order to control the DMA unit (132) of the data flow part.

In case that the task instruction is a ta_end (412), then it is signalized in the LRT that all the necessary information for starting the task dispatching has been collected from the control flow. In other words, once the ta_end task instruction has been processed by the task_interpreter (121), all information on data dependencies, data transfers and memory requirements have been collected for a task, and the task dispatching can start.

After the registration into FRT or PRT tables caused by the task instructions ta_fetch, ta_launch or ta_put, a data dependency checking between the data blocks of the current task and the data blocks of the pending tasks is carried out. This can be done by the Data Block Dependency Checker (122) shown in Figure 1. The identified data dependencies are recorded in data dependency tables located in the Control/Data Flow Synchronizer unit.

Finally, after data dependencies have been recorded, a dynamic data block management unit (122) of the task preparation unit of the multiprocessor system allocates the necessary local memory of the processing element. This allocated memory will be used for storing data blocks and the task's finite subprograms.

Steps (402), (404), (409), (410) and (412) can be performed by the task interpreter (121). Steps (403), (405), (411) and (413) can be performed by the processor /cluster allocation unit (124). Steps (406) and (407) can be performed by the data block dependency checker (123), and step (408) can be performed by the dynamic data block management unit (122). It is however to be appreciated that other components may likewise provide the same or similar functionality.

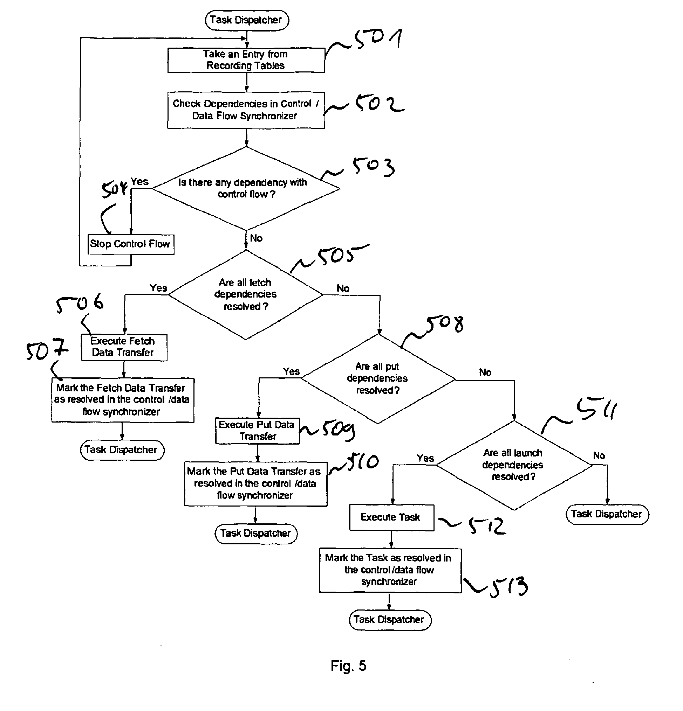

The second aspect of decoupling between control flow and data flow, which in the present embodiment is called task dispatcher, is illustrated in Figure 5. This may be performed by the Task Dispatcher means illustrated in the embodiment illustrated in Figure 1.

The task dispatcher analyses pending entries in the LRT, PRT and FRT with the purpose of firing their execution. Thus, it tries to achieve the resolution of data dependencies recorded previously. This can be accomplished as follows:
The task dispatcher checks if (503) control flow data is trying to access pending data recorded in the recording tables (126). In case that there is such a data dependency, the Control/Data Flow Synchronizer (125) stops the execution of the Control Flow Processor (114) until the data flow processing part (130) makes the necessary data available. When this data is available, the control flow program is allowed to continue its execution. The related data observation and the corresponding synchronization can be implemented, for example, by means of a first-in-first-out buffer or address snooping mechanisms.

If the entry at hand was from the FRT, this fetch data transfer is checked (505) against all pending data transfers. In case that there are no pending dependencies for this fetch transfer, it is executed (506), i.e. the data block is transferred by the DMA unit to the local memory of the processing element in which the task will be executed. After execution, the fetch data transfer is marked (507) as resolved in the FRT. Recall that fetch transfers can be related either to data blocks or task's finite subprograms.

If the entry at hand was from the PRT, this put data transfer is checked (508) against all pending data transfers. In case that there are no pending dependencies for this put transfer, it is executed (509), i.e. the data block is transferred by the DMA unit from the local memory of the corresponding processing element. After execution, the put data transfer is marked (510) as resolved in the PRT.

If the entry at hand was from the LRT, then it is checked (511) if all necessary data dependencies related to this task have been resolved. In case there are no pending dependencies, the task is executed (512) on the processing element as determined previously. After the task has been executed, it is marked (513) as resolved in the LRT.

A further aspect of the present invention concerns the allocation of tasks to processors and clusters. Recall that during task preparation a suitable processing element is selected on which the task is to be executed.

In a further embodiment, the data flow part (130) may contain several types of processing elements, such as processors (140), with various data widths. One benefit of such a heterogeneous multi-core architecture is the ability to implement a data flow part that can process different types of data, such as video (e.g. 16 bit) and audio (e.g. 24 bit). On the other hand, a homogeneous data flow part provides scalability of performance by increasing the number of processing elements of a given type. A combination of the benefits of homogeneous and heterogeneous cores can be achieved by organizing the processing elements in clusters: each cluster contains processing elements of a specific type, and several clusters form a heterogeneous system.

The Processor and Cluster Allocation unit (124) illustrated in Figure 1 may therefore determine a suitable cluster and processing element. This selection can be made based on parameters that include the type of the task at hand, the current load of the processing elements (number of assigned tasks), and the state of the local memory of the processing elements.

A further aspect of the present invention specifically addresses the issue of real-time processing. In particular, the task synchronizer can be further enhanced to support real-time processing by the system. To this end, a pre-emption signal is passed to the task synchronizer that causes the task synchronizer to immediately stop executing current tasks, to start processing new tasks, and to automatically resume scheduling and processing of tasks whose execution has previously been stopped by such pre-emption.

Information about the urgency of a task execution - including the final ta_put - is passed to the task interpreter by indicating either a desired execution time or priority level. This timing and priority information can be provided either by the programmer or by an operating system running on the control flow part.

Within the task synchronizer, if an execution time was provided, then this is converted into a priority level of the ta_put part. The task synchronizer then determines the task with highest priority of the corresponding ta_put, and based on this information, identifies all entries in the recording tables whose execution is required for accomplishing the ta_put at hand. These entries are then scheduled for processing first.

As a result, the task synchronizer together with the data flow part can support real-time mechanisms implemented on the control flow part (e.g. by an operating system).

Further aspects of the present invention concern a dynamic memory allocation as well as data broadcast, bypassing and caching. The allocation of the local memories to store data and instruction blocks is done automatically and dynamically during task preparation as described above. This private memory implementation of a multi-core system is handled by the dynamic data block management unit.

For data blocks that are required by more than one processing element, a broadcast of this data block is performed to the corresponding processing elements.

Further, in another advantageous implementation, the dynamic data block management unit (122) illustrated in Figure 1 implements a mechanism for transferring data blocks directly from one processing element to another processing element so to keep memory transfers limited in the data flow part of the system. This operation is known as bypassing of data blocks.

Based on the information in the recording tables, the dynamic data block management unit (122) illustrated in Figure 1 also checks the necessity of pending data transfers; if the data block at hand has previously been fetched to a processing element and the data is still locally available, then a repeated fetch operation and the related data transfer can be advantageously avoided. This implements an explicit cache mechanism.

These aforementioned aspects and embodiments may also be combined with each other.

A person skilled in the art will also recognize from these aspects and embodiments that present invention may provide the following advantages over the related art:
The present invention may provide a binary software compatibility across different configurations of the system (number of parallel processing elements). That is, the program executed on the system can be designed without prior knowledge of the number of the underlying processing elements.

This software compatibility may enable performance scalability over the number of processing elements as long as data dependencies at task level allows for exploitation of parallelism.

The present invention may provide an increased software reliability. Particularly, the self-organizing nature of the synchronization method may ensure a reliable execution and avoids drawbacks such as deadlocks that are common on many state-of-the-art approaches.

The present invention may provide a single code base in a higher-level programming language that can be used for processing both control flow and data flow. The data flow processing can thereby be processed by heterogeneous processing elements.

The present invention may provide for a simplified debugging of the program code, since there may only a single view on the system that is given by the code running on the control flow part and that has the task calls for execution on the data flow part. This control flow code is very easy to understand as it comprises only atomic sequential instructions.

The present invention may provide system wherein the synchronization between control and data flow is achieved automatically, thereby overcoming the manual effort and overhead-burdened execution models of prior art.

The present invention may allow that the number and types of tasks that are processed is arbitrary.

A method according to present invention may enable a disciplined, explicit memory access that is scheduled by the system and not by the programmer, resulting in speedup as well as power-savings. Moreover, the system may use the same infrastructure required for resolving data dependencies for tracing data blocks located at the local memories of processing elements, thus avoiding the use of expensive snooping-based or directory-based memory coherency protocols.

The present invention may provide a statistical speedup of applications from a concurrent execution of tasks.

Support of real-time processing of different time-shared threads of control flow programs competing for execution time in a single thread manner may be enabled by the pre-emption support of the task synchronizer, thus allowing the embodiment to be used together with a slim real time operating system featuring a very simple priority scheduling of independent tasks. This is possible since the synchronization throughout each thread of the control flow program is taken over by the task synchronizer.

The present invention may allow that the synchronization of tasks comprised in a time-sliced multithreaded system of control flow programs sharing a common memory space can be easily supported by the task synchronizer as the shared memory reveals data dependencies between tasks regardless of the thread they are coming from. It can be noted that from the task synchronizer perspective it does not matter whether the multithreaded system has been built using a uniprocessor or a multiprocessor system for the execution of the different control flow threads.

While the invention has been described with respect to the physical embodiments constructed in accordance therewith, it will be apparent to those skilled in the art that various modifications, variations and improvements of the present invention may be made in light of the above teachings and within the purview of the appended claims without departing from the spirit and intended scope of the invention. In addition, those areas in which it is believed that those of ordinary skill in the art are familiar, have not been described herein in order to not unnecessarily obscure the invention described herein. Accordingly, it is to be understood that the invention is not to be limited by the specific illustrative embodiments, but only by the scope of the appended claims.

## Claims

1. A processor system (100) for executing at least one application, said at least one application comprising a plurality of tasks, wherein at least two of said plurality of tasks are executed in parallel by said processor system; said processor system comprising:
control flow means (110) for executing control flow information, said control flow information comprising a plurality of instructions that are executable by said control flow means (110), wherein said control flow information specifies said plurality of tasks of said at least one application;
data flow means (130) for executing said plurality of tasks; said data flow means (130) comprising a plurality of processing elements (140), each of said plurality of processing elements being for executing one or more of said plurality of tasks; wherein
each of said plurality of processing elements is adapted to execute one or more of said plurality of tasks by processing at least one input data value and by outputting at least one output data value; and
synchronization means (120) for controlling the execution of said plurality of tasks by said plurality of processing elements (140);
wherein
said control flow means (110) is adapted to provide or identify the plurality of tasks that are specified by said control flow information to said synchronization means (120);
**characterized by**
said synchronization means (120) being adapted to determine, at run-time, an order of execution of said plurality of tasks that are provided or identified by said control flow means (110) by:
identifying information concerning data dependencies between said at least one input data value and said at least one output data value of said plurality of tasks and between said plurality of tasks and said control flow information, wherein identifying information concerning data dependencies comprises determining the memory location and size of the at least one input data value and the at least one output data value of said plurality of tasks;
storing the information concerning data dependencies in at least one table; and
resolving the data dependencies by analyzing the entries in said at least one table; and
said synchronization means (120) being further adapted to map the plurality of tasks that are provided or identified by said control flow means (110) to said plurality of processing elements according to said determined order of execution by specifying on which of said plurality of processing elements each of said plurality of tasks is to be executed.

2. The processor system (100) of claim 1, wherein said synchronization means (120) is further adapted to control the provision of the at least one output data value of said plurality of tasks from said data flow means (130) to said control flow means (110).

3. The processor system (100) of claim 1 or 2, wherein said control flow means (110) is further adapted to provide or identify a first set of said plurality of tasks, and
said synchronization means (120) is further adapted to maintain in a buffer means (126) of said synchronization means (120) said first set of said plurality of tasks and to indicate to said control flow means (110) when to provide or indicate one or more further tasks or sets of tasks or when to stop providing or indicating one or more further tasks or sets of tasks.

4. The processor system (100) of claim 3, wherein indicating, by said synchronization means (120), to said control flow means (110) when to provide or indicate or when to stop providing or indicating one or more further tasks or sets of tasks comprises at least one of:
sending at least one of: a request for one or more tasks, an indication for providing further tasks, an indication to stop providing further tasks depending on the state of said buffer means (126), an indication to continue providing further tasks depending on the state of said buffer means (126);
preventing said control flow means (110) from providing or indicating one or more further tasks or sets of tasks by disabling said control flow means (110) to write data to said synchronization means (120); and
stopping the execution of said control flow means (110).

5. The processor system (100) of one of claims 1 to 4,
wherein each of said plurality of tasks comprises one or more instructions that are executable by one or more of said plurality of processing elements (140), said one or more instructions of each task determining a manner how to process said at least one input data value in order to output said at least one output data value of said task; and
said control flow information specifies a sequence of said plurality of tasks of said at least one application and specifies said at least one input data value, said at least one output data value of said plurality of tasks.

6. The processor system (100) of claim 5, wherein said plurality of tasks of said at least one application being stored in a memory means (111, 131) of said processor system, and
said synchronization means (120) is further adapted to initiate the transfer of said at least one input data value and said instructions of said plurality of tasks from said memory means (111, 131) to local memory means (141) of said respective processing elements at run-time when executing said at least one application.

7. The processor system (100) of claim 6, wherein said synchronization means (120) is further adapted to initiate the transfer of said at least one input data value separately from the transfer of said instructions of said plurality of tasks to said plurality of processing elements, depending upon the determined data dependencies and the one or more instructions of said plurality of tasks.

8. The processor system (100) of one of claims 5 to 7, wherein one or more of said instructions of tasks remain at a processing element, if said processing element executes at least two tasks that comprise said one or more of said instructions.

9. The processor system (100) of one of claims 5 to 7, further comprising a cache mechanism for avoiding repeated reloads of data from said memory means (111, 131) of said processor system to said local memory means (141) of said respective processing elements.

10. The processor system (100) of one of claims 1 to 9, wherein said synchronization means (120) comprises means for determining (121) said instructions of said provided or indicated plurality of tasks at run-time when executing said at least one application.

11. The processor system (100) of one of claims 1 to 10, wherein said synchronization means (120) is further adapted to allocate and/or to free memory in local memory means (141) of said respective processing elements for storing said at least one input data values and/or instructions of said plurality of tasks to be executed by said respective processing elements.

12. The processor system (100) of one of claims 1 to 11, wherein said at least one input data value of said plurality of tasks are broadcasted to more than one or all of said plurality of processing elements (140).

13. The processor system (100) of one of claims 1 to 12, further comprising means for passing data between said processing elements (140), said data comprising data of one or more of said at least one output data values.

14. The processor system (100) of one of claims 1 to 13, further comprising a pre-emption mechanism for triggering said synchronization means (120) to immediately stop executing a current task of said plurality of tasks, to start processing a new task of said plurality of tasks, and to automatically resume scheduling and processing of tasks of said plurality of tasks whose execution has previously been stopped by such pre-emption mechanism.

15. The processor system (100) of one of claims 1 to 14, wherein said processing elements (140) are organized in clusters of homogeneous processors,
wherein tasks of said provided sequence are allocated to said clusters and their processing elements at run-time when executing at least one said application.

16. The processor system (100) of one of claims 1 to 15, wherein said processing elements (140) are processors of a multiprocessor or a multi-core system.

17. The processor system (100) of one of claims 1 to 16, wherein said plurality of tasks are managed by said synchronization means (120) through at least one recording table, wherein entries of said at least one recording table represent the transfers of data to said processing elements (140); said at least one recording table having a predefined size, said data comprising said at least one input data value and/or said instructions of said tasks to be executed;
wherein if no space is available in said at least one recording table, said synchronization means (120) is adapted to indicate to said control flow means (110) to stop providing further tasks or instructions and/or to indicate to stop execution of said control flow means (110).

18. The processor system (100) of one of claims 1 to 16, wherein said at least one input data values and/or said at least one output data value span multiple data memory regions which are resolved at run-time when executing said at least one application.

19. The processor system (100) of one of claims 1 to 18, wherein said at least one input data values and/or said at least one output data value are data blocks representing a plurality of values.

20. A method for executing at least one application in a processor system (100), said at least one application comprising a plurality of tasks, wherein at least two of said plurality of tasks are executed in parallel by said processor system; said method comprising:
executing control flow information, said control flow information comprising a plurality of instructions that are executable by a control flow means (110) of said processor system, wherein said control flow information specifies said plurality of tasks of said at least one application, said plurality of tasks comprising one or more instructions for processing at least one input data value and for outputting at least one output data value; said executing comprising:
providing or identifying, by said control flow means (110), said plurality of tasks to a synchronisation means (120);
determining, by the synchronization means (120), at run-time an order of execution of said plurality of tasks that are provided or identified by said control flow means (110), comprising:
identifying information concerning data dependencies between said at least one input data value and said at least one output data value of said provided or identified plurality of tasks and between said plurality of tasks and said control flow information; wherein identifying information concerning data dependencies comprises determining the memory location and size of the at least one input data value and the at least one output data value of said plurality of tasks;
storing the information concerning data dependencies in at least one table;
resolving the data dependencies by analyzing the entries in said at least one table; and
mapping the plurality of tasks that are provided or identified by said control flow means (110) to said plurality of processing elements according to said determined order of execution by specifying on which of said plurality of processing elements each of said plurality of tasks is to be executed; and
executing said plurality of tasks by a data flow means (130) of said processor system, said data flow means comprising a plurality of processing elements (140), each of said plurality of processing elements being for executing one or more of said plurality of tasks; said executing comprising:
processing, for each of said plurality of tasks, at least one input data value, and
outputting, for each of said plurality of tasks, at least one output data value.

## Patentansprüche

1. Prozessorsystem (100) zum Ausführen mindestens einer Applikation, wobei die mindestens eine Applikation eine Vielzahl von Prozessen (tasks) umfasst und mindestens zwei der Prozesse von dem Prozessorsystem parallel ausgeführt werden; wobei das Prozessorsystem umfasst:
Ablaufsteuerungsmittel (110) zum Ausführen von Ablaufsteuerungsinformationen (control flow information), wobei die Ablaufsteuerungsinformationen eine Vielzahl von Befehlen umfassen, die durch das Ablaufsteuerungsmittel (110) ausführbar sind und wobei die Ablaufsteuerungsinformationen die Vielzahl von Prozessen der mindestens einen Anwendung angeben;
Datenflussmittel (130) zum Ausführen der Vielzahl von Prozessen, wobei das Datenflussmittel (130) eine Vielzahl von Verarbeitungselementen (140) umfasst und jede der Verarbeitungselemente zum Ausführen von einem oder von mehreren der Vielzahl von Prozessen ist; wobei
jedes der Vielzahl von Verarbeitungselementen angepasst ist, einen oder mehrere der Vielzahl von Prozessen mittels Verarbeitens mindestens eines Eingabewertes und Ausgebens mindestens eines Ausgabewertes auszuführen; und
Synchronisierungsmittel (120) zum Steuern des Ausführens der Vielzahl von Prozessen durch die Vielzahl von Verarbeitungselementen (140);
wobei
das Ablaufsteuerungsmittel (110) angepasst ist, die Vielzahl der Prozesse, welche durch die Ablaufsteuerungsinformation angegeben werden, dem Synchronisierungsmittel (120) bereitzustellen oder anzuzeigen;
**dadurch gekennzeichnet, dass**
das Synchronisierungsmittel (120) angepasst ist, zur Laufzeit eine Ausführungsreihenfolge der Vielzahl von Prozessen, welche durch das Ablaufsteuerungsmittel (110) bereitgestellt oder angezeigt werden, wie folgt zu bestimmen:
Ermitteln einer Information bezüglich Datenabhängigkeiten zwischen dem mindestens einen Eingabewert und dem mindestens einen Ausgabewert der Vielzahl von Prozessen und zwischen der Vielzahl von Prozessen und der Ablaufsteuerungsinformationen, wobei das Ermitteln der Information bezüglich den Datenabhängigkeiten ein Ermitteln der Speicherstelle und der Größe des mindestens einen Eingabewertes und des mindestens einen Ausgabewertes der Vielzahl von Prozessen umfasst;
Speichern der Informationen bezüglich der Datenabhängigkeiten in mindestens einer Tabelle; und
Auflösen der Datenabhängigkeiten mittels Analysierens der Einträge in der mindestens einen Tabelle; und
das Synchronisierungsmittel (120) des Weiteren angepasst ist, die Vielzahl der Prozesse, welche durch das Ablaufsteuerungsmittel (110) bereitgestellt oder angezeigt werden, auf die Vielzahl von Verarbeitungselementen gemäß der ermittelten Ausführungsreihenfolge zu verteilen, mittels Angebens, durch welches der Vielzahl von Verarbeitungselementen jeder der Vielzahl von Prozessen auszuführen ist.

2. Prozessorsystem (100) gemäß Anspruch 1, wobei das Synchronisierungsmittel (120) des Weiteren angepasst ist, die Bereitstellung des mindestens einen Ausgabewertes der Vielzahl von Prozessen durch das Datenflussmittel (130) an das Ablaufsteuerungsmittel (110) zu steuern.

3. Prozessorsystem (100) gemäß Anspruch 1 oder 2, wobei das Ablaufsteuerungsmittel (110) des Weiteren angepasst ist, einen ersten Satz der Vielzahl von Prozessen bereitzustellen oder anzuzeigen, und
das Synchronisierungsmittel (120) des Weiteren angepasst ist, in einem Puffer (126) des Synchronisierungsmittels (120) den ersten Satz der Prozesse zu speichern und angepasst ist, dem Ablaufsteuerungsmittel (110) anzuzeigen, wenn einer oder mehrere weitere Prozesse oder Sätze von Prozessen bereitzustellen oder anzuzeigen sind, oder wenn das Bereitstellen oder Anzeigen von einem oder mehreren weiteren Prozessen oder Sätzen von Prozessen abzubrechen ist.

4. Prozessorsystem (100) gemäß Anspruch 3, wobei das Anzeigen durch das Synchronisierungsmittel (120) an das Ablaufsteuerungsmittel (110) wenn einer oder mehrere Prozesse oder Sätze von Prozessen bereitgestellt oder angezeigt werden sollen oder wenn das Anzeigen oder Bereitstellen abzubrechen ist, mindestens eines der Folgenden umfasst:
Senden mindestens eines der Folgenden: eine Anforderung für einen oder mehrere Prozesse, eine Anzeige zum Bereitstellen weiterer Prozesse, eine Anzeige, das Bereitstellen weiterer Prozesse abzubrechen in Abhängigkeit des Status des Puffers (126), und eine Anzeige, das Bereitstellen weiterer Prozesse fortzuführen in Abhängigkeit des Status des Puffers (126);
Unterbinden des Bereitstellens oder Anzeigens eines oder mehrerer weiterer Prozesse oder Sätze von Prozessen durch das Ablaufsteuerungsmittel (110) mittels Unterbindens des Schreibens von Daten durch das Ablaufsteuerungsmittel (110) an das Synchronisierungsmittel (120); und
Abbrechen des Ausführens des Ablaufsteuerungsmittels (110).

5. Prozessorsystem (100) gemäß einem der Ansprüche 1 bis 4, wobei
jeder der Vielzahl der Prozesse einen oder mehrere Befehle umfasst, die von einem oder von mehreren der Vielzahl von Verarbeitungselementen (140) ausführbar sind, und wobei der eine oder die mehreren Befehle eines jeden Prozesses angeben, wie der mindestens eine Eingabewert zu verarbeiten ist, um den mindestens einen Ausgabewert des Prozesses auszugeben; und
die Ablaufsteuerungsinformation einer Reihenfolge der Vielzahl von Prozessen der mindestens einen Applikationen angibt, sowie den mindestens einen Eingabewert und den mindestens einen Ausgabewert der Vielzahl von Prozessen angibt.

6. Prozessorsystem (100) gemäß Anspruch 5, wobei die Vielzahl der Prozesse der mindestens einen Applikation in einem Speichermittel (111, 131) des Prozessorsystems gespeichert werden und
das Synchronisierungsmittel (120) des Weiteren eingepasst ist, die Übertragung des mindestens einen Eingabewertes und der Befehle der Vielzahl von Prozessen von dem Speichermittel (111, 131) zu einem lokalen Speichermittel (141) des entsprechenden Verarbeitungselementes zur Laufzeit, wenn die mindestens eine Applikation ausgeführt wird, zu initiieren.

7. Prozessorsystem (100) gemäß Anspruch 6, wobei das Synchronisierungsmittel (120) des Weiteren angepasst ist, die Übertragung des mindestens einen Eingabewertes separat von der Übertragung der Befehle der Vielzahl von Prozessen zu der Vielzahl von Verarbeitungselementen in Abhängigkeit der ermittelten Datenabhängigkeiten und der einen oder mehreren Befehle der Prozesse zu initiieren.

8. Prozessorsystem (100) gemäß einem der Ansprüche 5 bis 7, wobei einer oder mehrerer der Befehle der Prozesse bei dem Verarbeitungselement verbleibt, wenn das Verarbeitungselement mindestens zwei Prozesse ausführt, die einen oder mehrere der Befehle umfassen.

9. Prozessorsystem (100) gemäß einem der Ansprüche 5 bis 7, welches des Weiteren einen Cache-Mechanismus zum Verhindern von wiederholtem Nachladen von Daten aus dem Speichermittel (111, 131) des Prozessorsystems in das lokale Speichermittel (141) des entsprechenden Verarbeitungselementes umfasst.

10. Prozessorsystem (100) gemäß einem der Ansprüche 1 bis 9, wobei das Synchronisierungsmittel (120) ein Mittel zum Bestimmen (121) der Befehle der bereitgestellten oder angezeigten Vielzahl von Prozessen zur Laufzeit, wenn die mindestens eine Applikation ausgeführt wird, umfasst.

11. Prozessorsystem (100) gemäß einem der Ansprüche 1 bis 10, wobei das Synchronisierungsmittel (120) des Weiteren angepasst ist, Speicherplatz in dem lokalen Speichermittel (141) des entsprechenden Verarbeitungselementes zum Speichern des mindestens einen Eingabewertes und/oder von Befehlen der Vielzahl von Prozessen, welche von dem entsprechenden Verarbeitungselement auszuführen sind, zu allokieren und/oder wieder freizugeben.

12. Prozessorsystem (100) gemäß einem der Ansprüche 1 bis 11, wobei der mindestens eine Eingabewert der Vielzahl von Prozessen zu mehr als einem oder allen der Vielzahl von Verarbeitungselementen (140) gesendet wird.

13. Prozessorsystem (100) gemäß einem der Ansprüche 1 bis 12, welches des Weiteren Mittel zum Weiterleiten von Daten zwischen den Verarbeitungselementen (140) umfasst, wobei die Daten Daten von einem oder von mehreren der mindestens einen Ausgabewerte umfassen.

14. Prozessorsystem (100) gemäß einem der Ansprüche 1 bis 13, welches des Weiteren ein Vorwegnahmemechanismus (pre-emption mechanism) zum Veranlassen des Synchronisierungsmittels (120) die Ausführung eines momentanen Prozesses aus der Vielzahl von Prozessen umgehend anzuhalten, die Bearbeitung eines neuen Prozesses aus der Vielzahl von Prozessen zu beginnen und automatisch die Ablaufplanung und Verarbeitung der Prozesse, dessen Ausführung zuvor durch den Vorwegnahmemechanismus gestoppt wurde, wieder aufzunehmen.

15. Prozessorsystem (100) gemäß einem der Ansprüche 1 bis 14, wobei die Verarbeitungselemente (140) in Clustern organisiert sind, die aus homogenen Prozessoren bestehen, wobei die Prozesse der bereitgestellten Folge den Clustern und deren Verarbeitungselementen zur Laufzeit, wenn die mindestens eine Applikation ausgeführt wird, zugewiesen werden.

16. Prozessorsystem (100) gemäß einem der Ansprüche 1 bis 15, wobei die Verarbeitungselemente (140) Prozessoren eines Multiprozessor- oder Multi-Core-Systems sind.

17. Prozessorsystem (100) gemäß einem der Ansprüche 1 bis 16, wobei die Vielzahl der Prozesse durch das Synchronisierungsmittel (120) mittels mindestens einer Aufnahmetabelle (recording table) verwaltet werden, wobei Einträge in der mindestens einen Aufnahmetabelle Übermittlungen von Daten zu den Verarbeitungselementen (140) repräsentieren; und wobei die mindestens eine Aufnahmetabelle eine vorbestimmte Größe hat und wobei die Daten die mindestens einen Eingabewerte und/oder die Befehle der auszuführenden Prozesse umfassen;
wobei das Synchronisierungsmittel (120) angepasst ist, dem Ablaufsteuerungsmittel (110) anzuzeigen, das Bereitstellen weiterer Prozesse oder Befehle anzuhalten und/oder anzuzeigen, das Ausführen des Ablaufsteuerungsmittels (110) anzuhalten, wenn kein Platz in der mindestens einen Aufnahmetabelle verfügbar ist.

18. Prozessorsystem (100) gemäß einem der Ansprüche 1 bis 16, wobei der mindestens eine Eingabewert und/oder der mindestens eine Ausgabewert sich über mehrere Datenspeicherregionen erstrecken, welche zur Laufzeit, wenn die mindestens eine Applikation ausgeführt wird, aufgelöst werden.

19. Prozessorsystem (100) gemäß einem der Ansprüche 1 bis 18, wobei der mindestens eine Eingabewert und/oder der mindestens eine Ausgabewert Datenblöcke sind, welche eine Vielzahl von Daten darstellen.

20. Verfahren zum Ausführen mindestens einer Applikation in einem Prozessorsystem (100), wobei die mindestens eine Applikation eine Vielzahl von Prozesse (tasks) umfasst und wobei mindestens zwei der Prozesse parallel durch das Prozessorsystem ausgeführt werden; wobei das Verfahren umfasst:
Ausführen von Ablaufsteuerungsinformationen (control flow information), wobei die Ablaufsteuerungsinformationen eine Vielzahl von durch ein Ablaufsteuerungsmittel (110) des Prozessorsystems ausführbare Befehle umfasst, wobei die Ablaufsteuerungsinformationen die Vielzahl der Prozesse der mindestens einen Applikation anzeigen, die Vielzahl der Prozesse einen oder mehrere Befehle zum Verarbeiten mindestens eines Eingabewertes und zum Ausgeben mindestens eines Ausgabewertes umfassen und wobei das Ausführen umfasst:
Bereitstellen oder Anzeigen der Vielzahl von Prozessen durch das Ablaufsteuerungsmittel (110) für ein Synchronisierungsmittel (120);
Bestimmen, durch das Synchronisierungsmittel (120), einer Bearbeitungsreihenfolge der Vielzahl von Prozessen zur Laufzeit, die durch das Ablaufsteuerungsmittel (110) bereitgestellt oder angezeigt werden, wobei das Bestimmen umfasst:
Anzeigen von Informationen bezüglich Datenabhängigkeiten zwischen dem mindestens einen Eingabewert und dem mindestens einen Ausgabewert der bereitgestellten oder angezeigten Vielzahl von Prozessen und bezüglich Datenabhängigkeiten zwischen der Vielzahl von Prozessen und der Ablaufsteuerungsinformationen; wobei das Anzeigen von Informationen über die Datenabhängigkeiten ein Bestimmen eines Speicherortes und einer Größe des mindestens einen Eingabewertes und dessen mindestens einen Ausgabewertes der Vielzahl von Prozessen umfasst;
Speichern der Information über die Datenabhängigkeiten in mindestens einer Tabelle;
Auflösen der Datenabhängigkeiten mittels Analysierens der Einträge in der mindestens einen Tabelle; und
Verteilen der Vielzahl von Prozessen, welche durch das Ablaufsteuerungsmittel (110) bereitgestellt oder angezeigt werden, auf die Vielzahl von Verarbeitungselementen gemäß der ermittelten Bearbeitungsreihenfolge mittels Angebens, durch welche der Vielzahl von Verarbeitungselementen jeder der Vielzahl von Prozessen auszuführen ist; und
Ausführen der Vielzahl von Prozessen durch ein Datenflussmittel (130) des Prozessorsystems, wobei das Datenflussmittel eine Vielzahl von Verarbeitungselementen (140) umfasst und jedes der Verarbeitungselemente zum Ausführen eines oder mehrerer der Vielzahl der Prozesse ist; und wobei das Ausführen umfasst:
Bearbeiten mindestens eines Eingabewertes für jeden der Vielzahl von Prozessen und
Ausgeben mindestens eines Ausgabewertes für jeden der Vielzahl von Prozessen.

## Revendications

1. Système de processeur (100) pour exécuter au moins une application, ladite au moins une application comprenant une pluralité de tâches, dans lequel au moins deux de ladite pluralité de tâches sont exécutées en parallèle par ledit système de processeur ; ledit système de processeur comprenant :
des moyens de flux de commande (110) pour exécuter des informations de flux de commande, lesdites informations de flux de commande comprenant une pluralité d'instructions qui sont exécutables par lesdits moyens de flux de commande (110), dans lequel lesdites informations de flux de commande spécifient ladite pluralité de tâches de ladite au moins une application ;
des moyens de flux de données (130) pour exécuter ladite pluralité de tâches ; lesdits moyens de flux de données (130) comprenant une pluralité d'éléments de traitement (140), chacun de ladite pluralité d'éléments de traitement servant à exécuter une ou plusieurs de ladite pluralité de tâches ; dans lequel
chacun de ladite pluralité d'éléments de traitement est adapté pour exécuter une ou plusieurs de ladite pluralité de tâches en traitant au moins une valeur de données d'entrée et en délivrant au moins une valeur de données de sortie ; et
des moyens de synchronisation (120) pour commander l'exécution de ladite pluralité de tâches par ladite pluralité d'éléments de traitement (140) ;
dans lequel
lesdits moyens de flux de commande (110) sont adaptés pour fournir la pluralité de tâches qui sont spécifiées par lesdites informations de flux de commande auxdits moyens de synchronisation (120) ou pour les identifier ;
**caractérisé en ce que**
lesdits moyens de synchronisation (120) sont adaptés pour déterminer, au moment de l'exécution, un ordre d'exécution de ladite pluralité de tâches qui sont fournies ou identifiées par lesdits moyens de flux de commande (110) en :
identifiant des informations concernant les dépendances des données entre ladite au moins une valeur de données d'entrée et ladite au moins une valeur de données de sortie de ladite pluralité de tâches et entre ladite pluralité de tâches et lesdites informations de flux de commande, dans lequel l'identification d'informations concernant les dépendances des données comprend la détermination de l'emplacement et de la taille de mémoire de ladite au moins une valeur de données d'entrée et de ladite au moins une valeur de données de sortie de ladite pluralité de tâches ;
mémorisant les informations concernant les dépendances des données dans au moins une table ; et
résolvant les dépendances des données en analysant les entrées dans ladite au moins une table ; et
lesdits moyens de synchronisation (120) sont en outre adaptés pour mapper la pluralité de tâches qui sont fournies ou identifiées par lesdits moyens de flux de commande (110) vers ladite pluralité d'éléments de traitement selon ledit ordre déterminé d'exécution en spécifiant l'élément de traitement parmi ladite pluralité d'éléments de traitement sur lequel chacune de ladite pluralité de tâches doit être exécutée.

2. Système de processeur (100) selon la revendication 1, dans lequel lesdits moyens de synchronisation (120) sont adaptés en outre pour commander la fourniture de ladite au moins une valeur de données de sortie de ladite pluralité de tâches desdits moyens de flux de données (130) auxdits moyens de flux de commande (110).

3. Système de processeur (100) selon la revendication 1 ou 2, dans lequel lesdits moyens de flux de commande (110) sont adaptés en outre pour fournir ou identifier un premier ensemble de ladite pluralité de tâches, et
lesdits moyens de synchronisation (120) sont en outre adaptés pour maintenir dans des moyens formant mémoire tampon (126) desdits moyens de synchronisation (120) ledit premier ensemble de ladite pluralité de tâches et pour indiquer auxdits moyens de flux de commande (110) quand il faut fournir ou indiquer une ou plusieurs autres tâches ou un ou plusieurs autres ensembles de tâches ou quand il faut cesser de fournir ou d'indiquer une ou plusieurs autres tâches ou un ou plusieurs autres ensembles de tâches.

4. Système de processeur (100) selon la revendication 3, dans lequel l'indication, par lesdits moyens de synchronisation (120), auxdits moyens de flux de commande (110) du moment auquel il faut fournir ou indiquer ou auquel il faut cesser de fournir ou d'indiquer une ou plusieurs autres tâches ou un ou plusieurs autres ensembles de tâches comprend au moins l'une des étapes suivantes consistant à :
envoyer au moins l'une d'une demande d'une ou de plusieurs tâches, d'une indication de fournir d'autres tâches, d'une indication de cesser de fournir d'autres tâches en fonction de l'état desdits moyens formant mémoire tampon (126), d'une indication de continuer de fournir d'autres tâches en fonction de l'état desdits moyens formant mémoire tampon (126) ;
empêcher lesdits moyens de flux de commande (110) de fournir ou d'indiquer une ou plusieurs autres tâches ou un ou plusieurs autres ensembles de tâches en désactivant l'écriture de données desdits moyens de flux de commande (110) dans lesdits moyens de synchronisation (120) ; et
arrêter l'exécution desdits moyens de flux de commande (110).

5. Système de processeur (100) selon l'une des revendications 1 à 4,
dans lequel chacune de ladite pluralité de tâches comprend une ou plusieurs instructions qui sont exécutables par un ou plusieurs de ladite pluralité d'éléments de traitement (140), lesdites une ou plusieurs instructions de chaque tâche déterminant une manière de traiter ladite au moins une valeur de données d'entrée afin de délivrer ladite au moins une valeur de données de sortie de ladite tâche ; et
lesdites informations de flux de commande spécifient une séquence de ladite pluralité de tâches de ladite au moins une application et spécifient ladite au moins une valeur de données d'entrée, ladite au moins une valeur de données de sortie de ladite pluralité de tâches.

6. Système de processeur (100) selon la revendication 5, dans lequel ladite pluralité de tâches de ladite au moins une application sont mémorisées dans des moyens formant mémoire (111, 131) dudit système de processeur ; et
lesdits moyens de synchronisation (120) sont en outre adaptés pour lancer le transfert de ladite au moins une valeur de données d'entrée et desdites instructions de ladite pluralité de tâches desdits moyens formant mémoire (111, 131) à des moyens formant mémoire locale (141) desdits éléments de traitement respectifs à l'instant d'exécution lors de l'exécution de ladite au moins une application.

7. Système de processeur (100) selon la revendication 6, dans lequel lesdits moyens de synchronisation (120) sont en outre adaptés pour lancer le transfert de ladite au moins une valeur de données d'entrée séparément du transfert desdites instructions de ladite pluralité de tâches à ladite pluralité d'éléments de traitement, en fonction des dépendances des données déterminées et desdites une ou plusieurs instructions de ladite pluralité de tâches.

8. Système de processeur (100) selon l'une des revendications 5 à 7, dans lequel une ou plusieurs desdites instructions de tâches restent dans un élément de traitement, si ledit élément de traitement exécute au moins deux tâches qui comprennent lesdites une ou plusieurs desdites instructions.

9. Système de processeur (100) selon l'une des revendications 5 à 7, comprenant en outre un mécanisme de mémoire cache pour éviter des rechargements répétés de données desdits moyens formant mémoire (111, 131) dudit système de processeur dans lesdits moyens formant mémoire locale (141) desdits éléments de traitement respectifs.

10. Système de processeur (100) selon l'une des revendications 1 à 9, dans lequel lesdits moyens de synchronisation (120) comprennent des moyens pour déterminer (121) lesdites instructions de ladite pluralité de tâches fournies ou indiquées à l'instant d'exécution lors de l'exécution de ladite au moins une application.

11. Système de processeur (100) selon l'une des revendications 1 à 10, dans lequel lesdits moyens de synchronisation (120) sont en outre adaptés pour attribuer et/ou pour libérer de la mémoire dans les moyens formant mémoire locale (141) desdits éléments de traitement respectifs pour mémoriser lesdites au moins une valeur de données d'entrée et/ou instructions de ladite pluralité de tâches à exécuter par lesdits éléments de traitement respectifs.

12. Système de processeur (100) selon l'une des revendications 1 à 11, dans lequel ladite au moins une valeur de données d'entrée de ladite pluralité de tâches est diffusée vers plusieurs ou la totalité de ladite pluralité d'éléments de traitement (140).

13. Système de processeur (100) selon l'une des revendications 1 à 12, comprenant en outre des moyens pour faire passer des données entre lesdits éléments de traitement (140), lesdites données comprenant des données d'une ou de plusieurs de ladite au moins une valeur de données de sortie.

14. Système de processeur (100) selon l'une des revendications 1 à 13, comprenant en outre un mécanisme de préemption pour déclencher lesdits moyens de synchronisation (120) pour cesser immédiatement l'exécution d'une tâche actuelle de ladite pluralité de tâches, pour débuter le traitement d'une nouvelle tâche de ladite pluralité de tâches, et pour reprendre automatiquement la programmation et le traitement de tâches de ladite pluralité de tâches dont l'exécution a été arrêtée précédemment par ce mécanisme de préemption.

15. Système de processeur (100) selon l'une des revendications 1 à 14, dans lequel lesdits éléments de traitement (140) sont organisés en groupes de processeurs homogènes, dans lequel les tâches de ladite séquence fournie sont attribuées auxdits groupes et à leurs éléments de traitement à l'instant d'exécution lors de l'exécution d'au moins une dite application.

16. Système de processeur (100) selon l'une des revendications 1 à 15, dans lequel lesdits éléments de traitement (140) sont les processeurs d'un système multiprocesseur ou multinoyau.

17. Système de processeur (100) selon l'une des revendications 1 à 16, dans lequel ladite pluralité de tâches sont gérées par lesdits moyens de synchronisation (120) par l'intermédiaire d'au moins une table d'enregistrement, dans lequel les entrées de ladite au moins une table d'enregistrement représentent les transferts de données auxdits éléments de traitement (140) ; ladite au moins une table d'enregistrement ayant une taille prédéfinie, lesdites données comprenant ladite au moins une valeur de données d'entrée et/ou lesdites instructions desdites tâches à exécuter ;
dans lequel, si aucun espace n'est disponible dans ladite au moins une table d'enregistrement, lesdits moyens de synchronisation (120) sont adaptés pour indiquer auxdits moyens de flux de commande (110) de cesser de fournir d'autres tâches ou instructions et/ou pour indiquer de cesser l'exécution desdits moyens de flux de commande (110).

18. Système de processeur (100) selon l'une des revendications 1 à 16, dans lequel ladite au moins une valeur de données d'entrée et/ou ladite au moins une valeur de données de sortie recouvre de multiples régions de mémoire de données qui sont résolues à l'instant d'exécution lors de l'exécution de ladite au moins une application.

19. Système de processeur (100) selon l'une des revendications 1 à 18, dans lequel ladite au moins une valeur de données d'entrée et/ou ladite au moins une valeur de données de sortie sont des blocs de données représentant une pluralité de valeurs.

20. Procédé d'exécution d'au moins une application dans un système de processeur (100), ladite au moins une application comprenant une pluralité de tâches, dans lequel au moins deux de ladite pluralité de tâches sont exécutées en parallèle par ledit système de processeur ; ledit procédé consistant à :
exécuter des informations de flux de commande, lesdites informations de flux de commande comprenant une pluralité d'instructions qui sont exécutables par des moyens de flux de commande (110) dudit système de processeur, dans lequel lesdites informations de flux de commande spécifient ladite pluralité de tâches de ladite au moins une application, ladite pluralité de tâches comprenant une ou plusieurs instructions pour traiter au moins une valeur de données d'entrée et pour délivrer au moins une valeur de données de sortie ; ladite exécution consistant à :
fournir, par lesdits moyens de flux de commande (110), ladite pluralité de tâches à des moyens de synchronisation (120) ou les identifier ;
déterminer, par les moyens de synchronisation (120), à l'instant d'exécution, un ordre d'exécution de ladite pluralité de tâches qui sont fournies ou identifiées par lesdits moyens de flux de commande (110), consistant à :
identifier des informations concernant les dépendances des données entre ladite au moins une valeur de données d'entrée et ladite au moins une valeur de données de sortie de ladite pluralité fournie ou identifiée de tâches et entre ladite pluralité de tâches et lesdites informations de flux de commande ; dans lequel l'identification d'informations concernant les dépendances des données comprend la détermination de l'emplacement et de la taille de mémoire de ladite au moins une valeur de données d'entrée et de ladite au moins une valeur de données de sortie de ladite pluralité de tâches ;
mémoriser les informations concernant les dépendances des données dans au moins une table ;
résoudre les dépendances des données en analysant les entrées dans ladite au moins une table ; et
mapper la pluralité de tâches qui sont fournies ou identifiées par lesdits moyens de flux de commande (110) vers ladite pluralité d'éléments de traitement selon ledit ordre déterminé d'exécution en spécifiant l'élément de traitement parmi ladite pluralité d'éléments de traitement sur lequel chacune de ladite pluralité de tâches doit être exécutée ; et
exécuter ladite pluralité de tâches par des moyens de flux de données (130) dudit système de processeur, lesdits moyens de flux de données comprenant une pluralité d'éléments de traitement (140), chacun de ladite pluralité d'éléments de traitement servant à exécuter une ou plusieurs de ladite pluralité de tâches ; ladite exécution consistant à :
traiter, pour chacune de ladite pluralité de tâches, au moins une valeur de données d'entrée, et
délivrer, pour chacune de ladite pluralité de tâches, au moins une valeur de données de sortie.
